(19) Europäisches Patentamt
European Patent Office
Office européen des brevets

(11) **EP 2 109 498 B1**

(12) **EUROPEAN PATENT SPECIFICATION**

(45) Date of publication and mention
of the grant of the patent:
**16.11.2016 Bulletin 2016/46**

(51) Int Cl.:
*B01J 8/38* (2006.01)   *B01J 19/18* (2006.01)
*B01J 19/24* (2006.01)   *C08F 2/01* (2006.01)
*C08F 2/14* (2006.01)   *C08F 10/00* (2006.01)
*C08F 210/06* (2006.01)   *C08F 210/16* (2006.01)

(21) Application number: **08708269.9**

(22) Date of filing: **28.01.2008**

(86) International application number:
**PCT/EP2008/050946**

(87) International publication number:
**WO 2008/095807 (14.08.2008 Gazette 2008/33)**

(54) **APPARATUS AND PROCESS FOR THE LIQUID-PHASE POLYMERIZATION OF OLEFINS**

VORRICHTUNG UND VERFAHREN ZUR POLYMERISIERUNG VON OLEFINEN IN DER FLÜSSIGPHASE

APPAREIL ET PROCÉDÉ DE POLYMÉRISATION D'OLÉFINES EN PHASE LIQUIDE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **05.02.2007 EP 07101751**

(43) Date of publication of application:
**21.10.2009 Bulletin 2009/43**

(73) Proprietor: **Basell Poliolefine Italia S.r.l.
20127 Milano (IT)**

(72) Inventors:
• **DORINI, Maurizio
I-46041 Porto Mantovano, Mantova (IT)**
• **PENZO, Giuseppe
I-46047 Montanara di Curtatone, Mantova (IT)**
• **SABBIONI, Sergio
I-44100 Ferrara (IT)**

(74) Representative: **Sacco, Marco
Basell Poliolefine Italia S.r.l.
Intellectual Property
P.le Privato G. Donegani, 12
Casella Postale 19
44100 Ferrara (IT)**

(56) References cited:
EP-A- 1 611 948          WO-A-2005/077522
WO-A-2005/077985          WO-A-2006/040240
US-A- 5 928 612          US-A1- 2004 122 187

**EP 2 109 498 B1**

**Description**

The present invention relates to an apparatus for polymerizing olefins comprising a sequence of at least two loop reactors and transfer means for conveying polymer slurry from a loop reactor to another loop reactor. The invention also relate to a process for the liquid-phase polymerization of olefins carried out in a sequence of at least two loop reactors. The use of catalysts with high activity and selectivity of the Ziegler-Natta type and, more recently, of the metallocene type has led to the widespread use on an industrial scale of processes in which the olefin polymerization is carried out in a liquid-phase or a gas-phase in the presence of a solid polymerization catalyst. Several reactions for polymerizing different olefins may be catalyzed by a Ziegler-Natta polymerization catalyst, thus producing olefin homopolymers and copolymers, such as ethylene and propylene (co)polymers. A Ziegler-Natta catalyst comprises a solid catalytic component based on a transition metal compound, such as a titanium tetrachloride, and an organometallic compound acting as the catalyst activator, such as an aluminium alkyl compound.

When reacting in a liquid-phase the polymerization may be performed under slurry conditions, where the obtained product consists of solid polymer particles in a suspension of liquid monomers (bulk polymerization), or alternatively, a suspension of polymer in the monomers mixed together with an inert polymerization solvent.

It is known to carry out the olefin polymerization under slurry conditions in one or more loop reactors. This type of reactor is widely used in the production of polyethylene and polypropylene. The polymer slurry is continuously circulated inside the loop reactor by a circulation pump to maintain a homogeneous dispersion of the solid polymer in the liquid reaction medium. Polymer slurry is withdrawn from the reactor and may be concentrated so that the solid content at the reactor outlet is higher than the solid content inside the loop reactor. Traditionally, this increase in the slurry concentration has been achieved by using settling legs at the discharge from the loop reactor: settling legs operate on a batch principle to recover the product. The concentrated polymer slurry is successively transferred to a flash tank, where most of the diluent and unreacted monomers are flashed off, so as to separate the solid polymer at the bottom of the flash tank.

It is also known that the catalyst prepolymeration helps in improving the morphological stability of the catalyst particles, reducing the probability of breakage of portions of them. The prepolymerisation treatment involves the contact for short residence times between the catalyst granules and small amounts of a polymerizable olefin.

Usually during the catalyst prepolymerization the operating conditions of temperature, average residence time and monomer concentration are selected so as to limit the advancing of the polymerization reaction and to achieve a low polymerization degree. In fact, if the monomers were added at high concentrations and/or at high values of temperature, for instance higher than 40°C, a violent reaction would take place with the consequence of fragmenting the catalyst particles. At the outlet of the prepolymerization reactor a more resistant prepolymerized catalyst system is obtained, which may be successfully used in subsequent polymerisation steps with a low risk of breaking it.

Loop reactors or stirred tank reactors of a reduced size may be suitably exploited to perform the prepolymerization treatment. At the outlet of the prepolymerization reactor the slurry containing the prepolymerized catalyst has to be transferred to a single polymerization reactor or to a sequence of more polymerization reactors to perform a multistage polymerization process. Multiple interconnected loop reactors can be used to perform the olefin polymerization process.

WO 2005/077985 A2 discloses a multiple loop reactor suitable for polymerizing olefins comprising at least two interconnected loop reactors, whereby said connection essentially consists of one or more transfer lines suitable for transferring polymer slurry from a reactor to another reactor and whereby said transfer line extends substantially horizontally under an angle with respect to a horizontal axis which is lower than 45°.

WO 2006/040240 A1, EP 1611948 A1 and US 2004/0122187 A1 disclose loop polymerization reactors and processes.

WO 2005/077522 A1 discloses a catalyst slurry preparation method and apparatus wherein the slurry transfer to a polymerization reactor is made through inclined conduits. US 5928612 discloses a polymerization reactor wherein the polymer draw-off conduit has a direction pointing downwards and forming with the horizontal plane an inclination with an angle at least equal to the angle of rest of the polymer and not exceeding 90°.

However, problems associated with the transfer of the polymer slurry between the serially connected slurry reactors can occur. During the normal operation of the polymerization apparatus a predefined pressure gradient along the transfer lines ensures a continuous transfer of polymer slurry between the interconnected loop reactors with a low risk of plugging the transfer lines. Also the granules of polymer eventually formed outside the loop reactors in the transfer lines are suitably dragged by the continuous flow of slurry and do not represent a risk of obstructing the transfer conduits. Nevertheless, when it becomes necessary to stop the polymerization plant, due to safety reasons or emergency situations, there is the need of completely emptying the prepolymerizator, the polymerization reactors and also the transfer lines connecting the sequence of loop reactors. While the loop reactors can be easily emptied through the emergency on-off valves placed at the bottom of the vertical legs which constitute the loop reactor, problems can arise in correspondence of the transfer pipes connecting each other the loop reactors.

Depending on the particular mutual arrangement of the multiple loop reactors and interconnecting transfer pipes, it can occur, in case of a polymerization stop, that the transfer pipes cannot be completely emptied, so that a certain amount of polymer slurry, unreacted monomers and catalyst components remain entrapped inside the transfer pipes: the polymerisation reaction proceeds and the growing polymer particles can seriously plug the transfer pipes between the interconnected loop reactors. This drawback is remarkable also if the upstream reactor is a stirred tank reactor, and is particularly severe if the upstream reactor is used for the catalyst prepolymerization, due to the particularly high activity of the prepolymered catalyst flowing in the transfer line.

Due to the above drawback, the polymerization plant cannot be restarted after the emergency stop, being necessary to clean the transfer pipes removing the solid obstructions: only after a complete removal of the polymer agglomerates, it is possible to restart the plant. Due to the length of the transfer pipes, said cleaning operation is complex and expensive, and also implies a considerable waste of time. Moreover, the polymerization plant is totally inactive during the cleaning operation, so that the productivity of the polymerization plant is prejudiced with a considerable waste of money.

In view of the foregoing, there is the need of providing an improvement in the arrangement of multiple loop reactors for the olefin polymerization, so as to avoid a waste of time and money for cleaning the interconnecting transfer pipes after any stop of the polymerization apparatus. It is therefore a first object of the invention an apparatus for the liquid-phase polymerization of one or more $\alpha$-olefins comprising:

- a first loop reactor;
- at least a downstream loop reactor;
- a connection line for transferring a polymer slurry from said first reactor to said downstream loop reactor, said connection line comprising:
- one or more adjacent pipes arranged at progressively increasing heights, each pipe forming with a horizontal direction (x) an angle $\alpha$ greater than the angle of rest of the obtained polymer;
- an on-off valve positioned flush with the wall of said downstream loop reactor, wherein said first reactor is a loop reactor of volume $V_1$ with a ratio $V_1/V_2$ comprised between 0.05 and 0.2, wherein $V_2$ is the volume of the downstream loop reactor.

The polymerization apparatus of the invention considerably decreases the risk of having solid obstructions in the transfer line connecting a first loop reactor to a downstream loop reactor. This advantage is particularly remarkable in case of a halt of the polymerization plant for safety reasons, emergency situations, or maintenance problems.

The first reactor of the present invention is a loop reactor used to carry out the prepolymerization of the catalyst system. According to a preferred embodiment of the invention, the first reactor is a loop reactor less bulky than the downstream loop reactor.

As known to the person skilled in the art, the polymerization loop reactors are generally formed by two or more vertical legs, which are joined each other by means of top and bottom bends, so as to generate a loop structure. According to a preferred embodiment, the first loop reactor of the present invention comprises from 2 to 4 vertical legs, while the downstream loop reactor comprises from 4 to 8 vertical legs.

The bottom portion of the vertical legs is provided with an on-off emergency valve for empting the loop reactor in case of emergency or maintenance reasons. According to an alternative embodiment, said on-off emergency valve to be opened in emergency situation may be placed on the bottom bends of the loop reactors.

The connection line for transferring the polymer slurry from the first reactor to the downstream loop reactor is formed by one or more adjacent pipes arranged at progressively increasing heights: this means that the outlet of said connection line is placed at a height higher than its inlet. Furthermore, the higher end of said connection line is endowed with an on-off valve positioned flush with respect to the wall of the downstream loop reactor. Preferably a piston valve is used as the on-off valve placed at the higher end of the connection line.

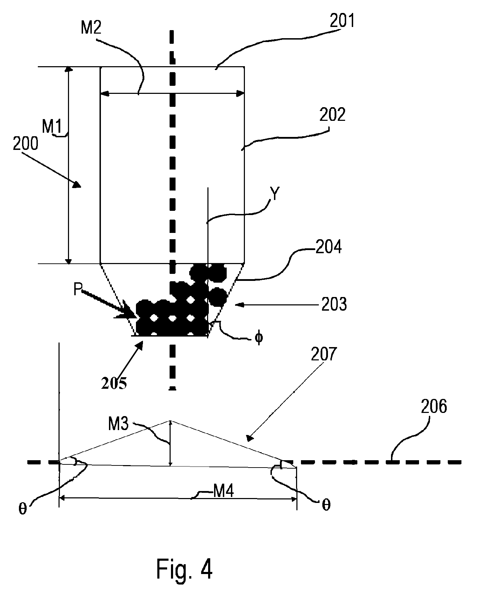

As said, each pipe of the above connection line forms an angle $\alpha$ with the horizontal direction (x), said angle $\alpha$ being greater than the angle of rest of the obtained polymer. As known to the person skilled in the art, the angle of rest or repose is defined as the maximum slope at which an amount of any powdered solid material will stand without sliding, or will come to rest when poured or dumped on a slope. With reference to a polymer powder, the angle of rest is a parameter providing an indicative measurement of the flowability of the polymer itself. Of course, the angle of rest depends on the particular polymer: higher is the angle of rest, lower is the polymer flowability. The angle of rest of a particular polymer can be easily measured as described successively in correlation with Fig 4.

During regular polymerization conditions the predefined pressure gradient existing between the first reactor and the downstream loop reactor is such to ensure the continuous transfer of polymer slurry between the two reactors: the on-off valve at the higher end of the transfer line is maintained open, so as to allow the entry of polymer slurry into the downstream loop reactor. Obviously, the emergency valves placed on the bottom bends of the loop reactors are maintained completely closed.

In case of an emergency stop, the particular arrangement of the polymerization apparatus of the invention prevents the polymer slurry from remaining entrapped in the transfer line. In fact, the emergency valves placed on the bottom bends of the reactors are open, so as to quickly empty the loop reactors. Simultaneously, the on-off valve on the top of the transfer line becomes completely closed, thus avoiding any reflow of polymer slurry back from the downstream reactor into the transfer line.

Due to gravity and depressurization of the system the polymer slurry present inside the transfer line can flow back to the first loop reactor. In fact, the pipes of the connection line are sloped of an angle α higher the angle of rest of the produced polymer, so that the polymer particles can flow back to the first loop reactor and are successively discharged by means of the emergency on-off valve positioned on the bottom bend of the first loop reactor.

The above technical features of the transfer line makes the polymerization apparatus of the invention automatically cleaned in case of a sudden stop of the polymerization plant: the transfer line connecting the first and the second reactor can be quickly emptied, and any possible obstruction of the connection line due to further polymerization reaction is avoided. Therefore, waste of time due to the cleaning of the connection pipes between the loop reactors, and also waste of money and productivity of the polymerization plant are advantageously avoided.

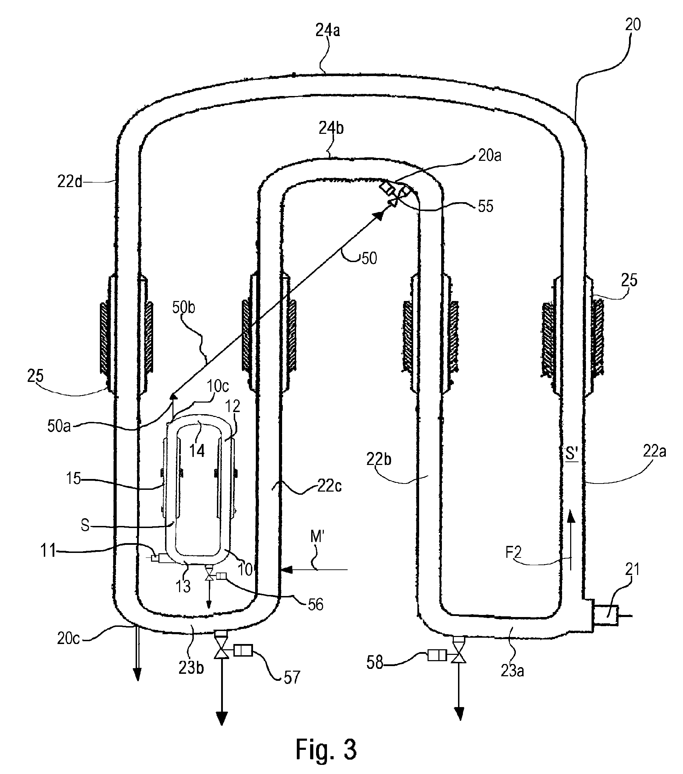

According to a preferred embodiment of the apparatus of the invention, the prepolymerization loop reactor of volume V1 is conveniently arranged, along the vertical direction, between the upper and the bottom bends of the loop reactor of volume V2. As regards the horizontal direction, it may be suitably arranged in the space comprised between two successive vertical legs of the loop reactor V2. This preferred arrangement is shown in detail in connection with Fig. 3 and gives the remarkable advantage of making less bulky the whole polymerization plant.

The invention will be better understood and carried into effect with reference to the attached drawings, in which an illustrative and non-limiting embodiment of the invention is shown.

Figure 1 is a schematic view of a polymerization apparatus to perform the olefin polymerization according to the invention;
Figure 2 is a schematic view of a first loop reactor, a downstream loop reactor and the respective connection line;
Figure 3 is a schematic view, which highlights the mutual position of the first loop reactor and the downstream loop reactor according to a preferred embodiment of the invention.
Figure 4 shows a method useful to calculate the angle of rest of a polymer.

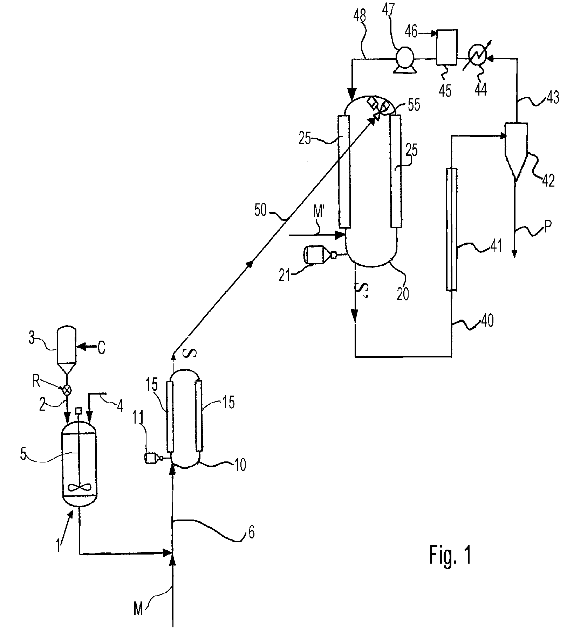

By way of an example, the polymerization apparatus of Fig. 1 can be employed in the production of propylene (co)polymers by means of a Ziegler-Natta catalyst. Ethylene and 1-butene may be used as comonomers. The apparatus comprises a catalyst preparation tank 1, a first loop reactor 10 to perform the catalyst prepolymerization, a connection line 50 and a downstream loop reactor 20.

A solid catalyst component C coming from a catalyst hopper 3, and a mixture 4 containing a solvent, an Al-alkyl compound as the catalyst activator, and optionally an electron donor compound, are fed to the catalyst preparation tank 1.

The catalyst preparation tank 1 comprises a stirrer 5 for stirring the solid catalyst particles and the above-mentioned components. The activated catalyst discharged from the catalyst preparation tank 1 merges into a line M feeding the monomer to the inlet of a prepolymerization reactor 10.

The loop reactor 10 of volume V1 comprises an axial flow pump 11, which provides the continuous circulation of the slurry inside the loop reactor 10. The loop reactor 10 is provided with an external jacket 15 in which water is made to circulate at the suitable temperature to maintain the desired operative conditions inside the loop reactor 10.

A slurry S containing the prepolymerized catalyst is discharged from the loop reactor 10. Said slurry S is fed to the downstream loop reactor 20 through the transfer line 50 having the arrangement and technical features claimed in the present invention. The transfer line 50 continuously conveys the polymer slurry S to an inlet in the downstream loop reactor 20. Suitable amounts of monomers are introduced via line M' into the downstream loop reactor 20.

The polymerization reactor 20 of volume V2 comprises an axial flow pump 21, which provides the continuous circulation of the polymer slurry inside the loop reactor 20. The loop reactor 20 is provided with an external jacket 25, in which water is circulated at a proper temperature in order to maintain the polymerization temperature at the desired values.

A polypropylene slurry S' containing polypropylene, unreacted monomers and catalyst residues is discharged from the loop reactor 20 and is continuously transferred via line 40 to a steam jacketed pipe 41, so as to ensure monomer evaporation during the polymer conveyance to a flash tank 42, operated at a pressure lower than the polymerization pressure.

A gaseous stream of unreacted monomers is collected at the top of the flash tank 42 and is fed via line 43 to a condenser 44, where the unreacted monomers are condensed before their recycle to the loop reactor 20. Make-up liquid monomers are also introduced via line 46 into a supply tank 45, from which said liquid monomers are fed via line 48 to the loop reactor 20 by means of a pump 47.

The polypropylene particles separated at the bottom of the flash tank 42 are conveyed via line P to the finishing section of the polymerization plant comprising polymer steaming, drying, extrusion and pelletization (not shown).

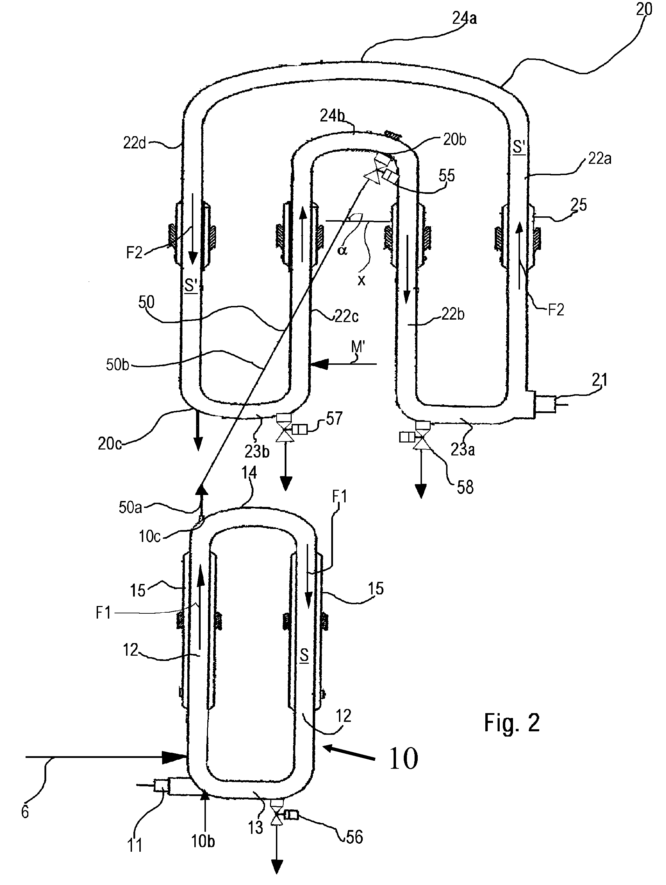

With reference to Figure 2 the polymerization apparatus of the invention is shown in detail.

The prepolymerisation reactor 10 comprises two vertical legs 12 joined together by a lower bend 13 and an upper bend 14. The two vertical legs 12 are partly surrounded by a cooling jacket 15, in which water is made to circulate. The suction of the axial flow pump 11 causes the circulation of the slurry of prepolymer S inside the loop reactor in the direction indicated by the arrow F1.

The bottom bend 13 of the loop reactor 10 is provided with an on-off emergency valve 56 for empting the vertical legs of the loop reactor 10 in case of emergency or safety reasons.

The slurry S obtained from the prepolymerisation reactor 10 is fed to the first polymerisation reactor 20 through the transfer line 50, extending from the outlet 10c of the prepolymerisation reactor 10 to the inlet 20b in the downstream polymerisation reactor 20.

The loop reactor 20 is provided with four vertical legs 22a, 22b, 22c and 22d, a first and second bottom bend 23a, 23b, a first and second upper bend 24a, 24b. The suction of the axial flow pump 21 is such that the polymer slurry S' circulates inside the loop reactor 20 in the direction indicated by the arrow F2.

The first vertical leg 22a and the second vertical leg 22b are reciprocally connected through the first bottom bend 23a, while the third vertical leg 22c and the fourth vertical leg 22d are reciprocally connected through the second bottom bend 23b. The first vertical leg 22a and the fourth vertical leg 22d are reciprocally connected through the first upper bend 24a, while the second vertical leg 22b and the third vertical leg 22c are reciprocally connected through the second upper bend 24b.

Preferably, the outlet 10c from the prepolymerisation reactor 10 is placed on the upper bend 14 of the first loop reactor 10, while the inlet 20b of the downstream loop reactor 20 is placed on the second upper bend 24b of the loop reactor 20.

The outlet 20c from the polymerisation reactor 20 is preferably arranged in correspondence of the bottom bend 23b, i.e. far from the delivery zone of the axial flow pump 21, so that the polymer slurry fed into the polymerisation reactor 20 at the inlet 20b flows for more than half loop circuit before being discharged from the outlet 20c. The bottom bends 23a and 23b of the loop reactor 20 are respectively provided with on-off emergency valves 57 and 58 for empting the loop reactor 20 in case of safety reasons.

The connection line 50 for conveying the slurry S from the loop reactor 10 to the polymerisation reactor 20 comprises an on-off piston valve 55, which is positioned flush with the wall of the upper bend 24b of the downstream loop reactor 20. The connection line 50 is formed by adjacent pipes 50a, 50b arranged at progressively increasing heights from the prepolymerisation reactor 10 to the polymerisation reactor 20, each pipe 50a, 50b defining with a horizontal direction x an angle $\alpha$ greater than an angle of rest of the produced polymer. The adjacent pipes forming the connection line 50 may be also differently sloped with respect to the horizontal direction x. Preferably the value of the above angle $\alpha$ is comprised between about 50° and 90°, more preferably between from 70° to 90°.

In case of polypropylene particles the typical angle of rest $\theta$ is of about 30°, so that in the arrangement of Fig. 2 the pipes 50a, 50b are tilted of an angle $\alpha$ higher than 30° with respect to the horizontal direction x.

In the embodiment of Figure 2 the first pipe 50a, starting from the outlet 10c of the reactor 10, is vertically oriented, thus forming with the horizontal direction x an angle of 90°. The second pipe 50b, extending up to the inlet 20b of the loop reactor 20, forms with the horizontal direction x an angle of about 60°, i.e. higher than the angle of rest $\theta$ of the polypropylene.

In case of an emergency stop of the polymerization process, the arrangement of Fig. 2 prevents the polymer slurry from remaining entrapped in the transfer line 50. In fact, the emergency valve 56 arranged on the bottom bend 13 of the loop reactor 10 may be opened, so as to quickly discharge the polymer slurry from the loop reactor 10. Also the emergency valves 57 and 58 arranged on the bottom bends 23a and 23b of the loop reactor 20 may be opened, so as to quickly empty the loop reactor 20. Simultaneously, in case of an emergency stop the on-off piston valve 55 on the top of the transfer line 50 should be completely closed, thus avoiding any reflow of polymer slurry back from the loop reactor 20 into the transfer line 50.

Due to gravity and sloping of the pipes 50a, 50b, the polymer slurry S flowing in the transfer line 50 cannot settle on the pipes 50a, 50b, but it can flow back to the first loop reactor 10, from which is discharged via the emergency on-off valve 56. Therefore, the formation of polymer chunks in the transfer line 50 is avoided and the polymerization apparatus is auto-cleaned. No polymer residues remain entrapped in the transfer line 50, so that, once solved the emergency or maintenance problems, the polymerization process can be restarted, without waste of time caused by cleaning operations.

With reference to Figure 3, a preferred arrangement of the loop reactor 10 and the downstream loop reactor 20 is shown. According to this embodiment, the special arrangement of the loop reactor 10 is such that it is positioned inside the overall dimension of the polymerisation reactor 20. This is possible since the prepolymerisation reactor 10 has a volume $V_1$ that is considerably smaller than volume $V_2$ of the polymerisation reactor 20.

The loop reactor 10 is arranged, along the vertical direction, between the upper bend 24b and the bottom bend 23b of the loop reactor 20 and, simultaneously, along the horizontal direction, it is positioned between two adjacent vertical legs of the loop reactor 20, in particular between the vertical legs 22c and 22d. The preferred arrangement of Fig. 3 makes less bulky the whole polymerization plant.

With reference to the Figure 4, a simple method for the calculation of the angle of rest is shown. The polymer to be subjected to measurement is introduced in a container 200 comprising an inlet 201, a central body 202 of cylindrical shape with a height M1 of about 10 cm, and a discharging portion 203. Said discharging portion has a conical shape and is provided with a wall 204 tilted of about 35° in relation to the vertical direction: an orifice 205 is placed at the bottom end of the discharging portion 203.

The polymer is introduced in the container 200 through the inlet 201 while maintaining closed the orifice 205. Once the container 200 is almost full of polymer P, the orifice 205 is opened and the polymer P falls down through the orifice 205 and settles on a horizontal plane 206, thus forming a cone 207 of polymer particles.

The distance between the orifice 205 and the plane 206 is of about 10 cm. The value of the height $M_3$ of the cone 207 depends on the friction between the adjacent polymer particles and their mutual sliding tendency (flowability). The height $M_3$ and the diameter $M_4$ of the cone 207 are measured, and the angle of rest $\theta$ of the specific polymer P can be calculated by means of the following formula:

$$\text{Tang } \boldsymbol{\theta} = M_3/R, \text{ wherein R is the radius of cone 207, i.e. } R=M_4/2.$$

As said, the measured angle of rest $\theta$ is a parameter providing an indicative measurement of the polymer flowability: the higher is the angle of rest $\theta$, the lower is the polymer flowability. The polymerization apparatus of the invention described in the Figs 1-3 enables to carry out the polymerization of olefins with a very low risk of having solid obstructions in the transfer line connecting the loop reactors.

It is therefore a second object of the invention a process for the liquid-phase polymerization of one or more $\alpha$-olefins in presence of a polymerization catalyst, the process comprising:

a) prepolymerizing said catalyst in a liquid medium in a first reactor to obtain a polymer slurry with a polymerization degree from 60 to 800 g per gram of solid catalyst component;
b) polymerizing said one or more $\alpha$-olefins in at least a downstream loop reactor; wherein the polymer slurry is transferred from said first reactor to said downstream loop reactor by means of a connection lines comprising:

- one or more adjacent pipes arranged at progressively increasing heights, each pipe forming with a horizontal direction an angle greater than a rest angle of the obtained polymer;
- an on-off valve positioned flush with the wall of said downstream loop reactor.

The prepolymerization step a) is carried out in a first reactor selected from a loop reactor or a continuously stirred tank reactor.

As regards the polymerization catalyst system fed to step a), a Ziegler-Natta catalyst, a metallocene catalyst, or a chromium based catalyst can be used.

A Ziegler-Natta catalyst system comprises the catalysts obtained by the reaction of a transition metal compound of Ti, V, Zr, Cr, and Hf with an organometallic compound of group 1, 2, or 13 of the Periodic Table of element.

A metallocene-based catalyst system comprises at least a transition metal compound containing at least one $\pi$ bond and at least an alumoxane or a compound able to form an alkylmetallocene cation.

The liquid medium of step a) comprises liquid alpha-olefin monomer(s), optionally with the addition of an inert hydrocarbon solvent. Said hydrocarbon solvent can be either aromatic, such as toluene, or aliphatic, such as propane, hexane, heptane, isobutane, cyclohexane and 2,2,4-trimethylpentane. The amount of hydrocarbon solvent, if any, is lower than 40% by weight with respect to the total amount of alpha-olefins, preferably lower than 20% by weight. Preferably step a) is carried out in the absence of inert hydrocarbon solvents.

The average residence time is the ratio between the volume of the loop reactor and the volumetric rate flow of polymer slurry discharged from said reactor. This parameter in step a) generally ranges from 2 to 40 minutes and can be modified by increasing or decreasing the output flow rate of the polymer slurry from the reactor. Said residence time preferably ranges from 10 to 25 minutes.

The operating conditions in step a) are such that the temperature is comprised between 10°C and 50°C, preferably between 20°C and 40°C, so as to limit the polymerization degree in step a) at values in the range from 60 to 800 g per gram of solid catalyst component, preferably from 150 to 400 g per gram of solid catalyst component.

Step a) is further characterized by a low concentration of solid in the slurry, typically in the range from 50 g to 300 g of solid per liter of slurry.

The above mentioned values of temperatures, residence times, and low solid concentrations enable the catalyst to be preserved: in fact, if the monomers were added at high concentrations a violent reaction would take place that would fragment the catalyst.

A slurry containing prepolymerized catalyst particles is discharged from the loop reactor of step a), said slurry being conveyed to the downstream loop reactor by means of the transfer line of the present invention. In the polymerization step b) temperatures comprised between 50°C and 95°C, preferably from 65 to 85°C are maintained, while the operating pressure is between 2.0 and 10 Mpa, preferably between 2.5 and 5.0 MPa.

The residence time of the slurry in the loop reactor of step b) is comprised between 10 min and 90 min, preferably between 20 min and 60 min.

Hydrogen is generally used as a chain transfer agent to adjust the molecular weight of the produced polyolefin. The total amount of $H_2$ fed to the polymerization loop reactor is less than 50000 ppm, preferably 100-15000 ppm weight, based on the total feed of monomers. The monomers to be polymerized in step b) are one or more $\alpha$-olefins of formula $CH_2$=CHR, where R is hydrogen or a hydrocarbon radical having 1-12 carbon atoms. Preferably, said $\alpha$-olefin is propylene: in this case the propylene concentration is comprised between 60 and 100% by weight, preferably between 75 and 95%, based on the total amount of liquid present in the loop reactor. The remaining part of liquid may comprise an inert hydrocarbon, if present, and one or more $\alpha$-olefin comonomers in case of copolymerization. The preferred comonomer is ethylene.

The polyolefin slurry coming from the polymerization loop reactor may be transferred to a further polymerization step carried out in a liquid-phase or a gas-phase reactor, or to a flash tank having the function to separate the solid polymer particles from the liquid phase.

### Claims

1.  An apparatus for the liquid-phase polymerization of one or more $\alpha$-olefins comprising:

    - a first reactor;
    - at least a downstream loop reactor;
    - a connection line for transferring a polymer slurry from said first reactor to said downstream loop reactor, said connection line comprising:
    - one or more adjacent pipes arranged at progressively increasing heights, each pipe forming with a horizontal direction (x) an angle $\alpha$ greater than the angle of rest of the obtained polymer;
    - an on-off valve positioned flush with the wall of said downstream loop reactor, wherein said first reactor is a loop reactor of volume $V_1$ with a ratio $V_1/V_2$ comprised between 0.05 and 0.2, wherein $V_2$ is the volume of the downstream loop reactor.

2.  The apparatus according to claim 1, wherein said first loop reactor comprises from 2 to 4 vertical legs, joined each other by means of top and bottom bends.

3.  The apparatus according to claim 1, wherein said downstream loop reactor comprises from 4 to 8 vertical legs, joined each other by means of top and bottom bends.

4.  The apparatus according to claim 1, wherein said angle $\alpha$ is comprised between 50° and 90°.

5.  The apparatus according to claims 2 or 3, wherein said vertical legs are provided with on-off emergency valves for empting the loop reactor.

6.  The apparatus according to claims 2 or 3, wherein said bottom bends are provided with on-off emergency valves for empting the loop reactor.

7.  The apparatus according to claim 1, wherein said first loop reactor is arranged, along the vertical direction, between the upper and the bottom bends of said downstream loop reactor.

8.  The apparatus according to claim 1, wherein said first loop reactor is arranged, along the horizontal direction, between two successive vertical legs of said downstream loop reactor.

9.  A process for the liquid-phase polymerization of one or more $\alpha$-olefins in presence of a polymerisation catalyst, the process comprising:

a) prepolymerizing said catalyst in a liquid medium in a first reactor to obtain a polymer slurry with a polymerization degree from 60 to 800 g per gram of solid catalyst component;

b) polymerizing said one or more $\alpha$-olefins in at least a downstream loop reactor; wherein the polymer slurry is transferred from said first reactor to said downstream loop reactor by means of a connection lines comprising:

- one or more adjacent pipes arranged at progressively increasing heights, each pipe forming with a horizontal direction an angle greater than a rest angle of the obtained polymer;
- an on-off valve positioned flush with the wall of said downstream loop reactor.

10. The process according to claim 9, wherein said polymerization catalyst is selected from Ziegler-Natta, metallocene, chromium based catalysts.

11. The process according to claim 9, wherein said liquid medium comprises liquid alpha-olefin monomer(s), optionally with the addition of an inert hydrocarbon solvent.

12. The process according to claim 9, wherein the average residence time in step a) ranges from 2 to 40 minutes.

13. The process according to claim 9, wherein the operating temperature in step a) is comprised between 10°C and 50°C.

14. The process according to claim 9, wherein the polymerization degree in step a) is from 150 to 400 g per gram of solid catalyst component.

15. The process according to claim 9, wherein in case of a polymerization stop the polymer slurry is removed from said first and downstream reactors by means of on-off emergency valves provided on the bottom bends of the reactors.

16. The process according to claim 9, wherein in case of a polymerization stop said on-off valve arranged on said transfer line is closed and the polymer slurry inside the transfer line flows back to said first reactor.

**Patentansprüche**

1. Vorrichtung zur Flüssigphasenpolymerisation von einem oder mehreren $\alpha$-Olefinen, umfassend:

- einen ersten Schlaufenreaktor;
- mindestens einen nachgeordneten Schlaufenreaktor;
- eine Verbindungsleitung zum Transferieren einer Polymeraufschlämmung aus dem ersten Reaktor in den nachgeordneten Schlaufenreaktor, wobei die Verbindungsleitung umfasst:
- ein oder mehrere benachbarte Rohre, die in zunehmend ansteigenden Höhen angeordnet sind, wobei jedes Rohr einen Winkel $\alpha$ zur Horizontalrichtung (x) bildet, der größer als der Ruhewinkel des erhaltenen Polymers ist;
- ein Ein-Aus-Ventil, das bündig mit der Wand des nachgeordneten Schlaufenreaktors positioniert ist,

wobei der erste Reaktor ein Schlaufenreaktor mit dem Volumen $V_1$ ist und das Verhältnis $V_1/V_2$ zwischen 0,05 und 0,2 liegt, wobei $V_2$ das Volumen des nachgeordneten Schlaufenreaktors ist.

2. Vorrichtung nach Anspruch 1, wobei der erste Schlaufenreaktor 2 bis 4 vertikale Schenkel umfasst, die mittels oberer und unterer Biegungen miteinander verbunden sind.

3. Vorrichtung nach Anspruch 1, wobei der nachgeordnete Schlaufenreaktor 4 bis 8 vertikale Schenkel umfasst, die mittels oberer und unterer Biegungen miteinander verbunden sind.

4. Vorrichtung nach Anspruch 1, wobei der Winkel $\alpha$ zwischen 50° und 90° liegt.

5. Vorrichtung nach den Ansprüchen 2 oder 3, wobei die vertikalen Schenkel mit Ein-Aus-Notventilen ausgestattet sind, um den Schlaufenreaktor zu leeren.

6. Vorrichtung nach den Ansprüchen 2 oder 3, wobei die unteren Biegungen mit Ein-Aus-Notventilen ausgestattet sind, um den Schlaufenreaktor zu leeren.

**7.** Vorrichtung nach Anspruch 1, wobei der erste Schlaufenreaktor entlang der Vertikalrichtung zwischen den oberen und unteren Biegungen des nachgeordneten Schlaufenreaktors angeordnet ist.

**8.** Vorrichtung nach Anspruch 1, wobei der erste Schlaufenreaktor entlang der Horizontalrichtung zwischen zwei aufeinander folgenden vertikalen Schenkeln des nachgeordneten Schlaufenreaktors angeordnet ist.

**9.** Verfahren zur Flüssigphasenpolymerisation von einem oder mehreren $\alpha$-Olefinen in Anwesenheit eines Polymerisationskatalysators, wobei das Verfahren umfasst:

a) Vorpolymerisieren des Katalysators in einem flüssigen Medium in einem ersten Reaktor, um eine Polymeraufschlämmung mit einem Polymerisationsgrad von 60 bis 800 g pro Gramm der festen Katalysatorkomponente zu erhalten;
b) Polymerisieren des einen oder der mehreren $\alpha$-Olefins in mindestens einem nachgeordneten Schlaufenreaktor;

wobei die Polymeraufschlämmung von dem ersten Reaktor mittels Verbindungsleitungen in den nachgeordneten Schlaufenreaktor transferiert wird, wobei die Verbindungsleitungen umfassen:

- ein oder mehrere benachbarte Rohre, die in zunehmend ansteigenden Höhen angeordnet sind, wobei jedes Rohr einen Winkel zur Horizontalrichtung bildet, der größer als der Ruhewinkel des erhaltenen Polymers ist;
- ein Ein-Aus-Ventil, das bündig mit der Wand des nachgeordneten Schlaufenreaktors positioniert ist.

**10.** Verfahren nach Anspruch 9, wobei der Polymerisationskatalysator ausgewählt ist aus Ziegler-Natta-Katalysatoren, Metallocenkatalysatoren, Katalysatoren auf Chrombasis.

**11.** Verfahren nach Anspruch 9, wobei das flüssige Medium flüssige $\alpha$-Olefinmonomer(e) umfasst, gegebenenfalls mit Zusatz eines inerten Kohlenwasserstofflösungsmittels.

**12.** Verfahren nach Anspruch 9, wobei die mittlere Verweilzeit in Schritt a) im Bereich von 2 bis 40 Minuten liegt.

**13.** Verfahren nach Anspruch 9, wobei die Arbeitstemperatur in Schritt a) zwischen 10 °C und 50 °C liegt.

**14.** Verfahren nach Anspruch 9, wobei der Polymerisationsgrad in Schritt a) 150 bis 400 g pro Gramm der festen Katalysatorkomponente beträgt.

**15.** Verfahren nach Anspruch 9, wobei im Fall eines Polymerisationsstopps die Polymeraufschlämmung mittels Ein-Aus-Notventilen, die in den unteren Biegungen der Reaktoren bereitgestellt sind, aus dem ersten und den nachgeordneten Reaktoren entfernt wird.

**16.** Verfahren nach Anspruch 9, wobei im Fall eines Polymerisationsstopps das an der Transferleitung befindliche Ein-Aus-Ventil geschlossen wird und die Polymeraufschlämmung im Inneren der Transferleitung zurück in den ersten Reaktor fließt.

**Revendications**

**1.** Appareil pour la polymérisation en phase liquide d'une ou de plusieurs $\alpha$-oléfines comprenant :

- un premier réacteur à boucle ;
- au moins un réacteur à boucle en aval ;
- une conduite de liaison pour transférer une suspension de polymère dudit premier réacteur audit réacteur à boucle en aval, ladite conduite de liaison comprenant :
- un ou plusieurs tuyaux adjacents agencés à des hauteurs augmentant progressivement, chaque tuyau formant, avec une direction horizontale (x), un angle $\alpha$ supérieur à l'angle de repos du polymère obtenu ;
- une vanne tout ou rien positionnée de manière alignée avec la paroi dudit réacteur à boucle en aval,

ledit premier réacteur étant un réacteur à boucle d'un volume $V_1$, le rapport $V_1/V_2$ étant compris entre 0,05 et 0,2, $V_2$ étant le volume du réacteur à boucle en aval.

9

2. Appareil selon la revendication 1, ledit premier réacteur à boucle comprenant 2 à 4 jambes verticales, reliées les unes aux autres au moyen de coudes dans le haut et dans le bas.

3. Appareil selon la revendication 1, ledit réacteur à boucle en aval comprenant 4 à 8 jambes verticales, reliées les unes aux autres au moyen de coudes dans le haut et dans le bas.

4. Appareil selon la revendication 1, ledit angle $\alpha$ étant compris entre 50° et 90°.

5. Appareil selon les revendications 2 ou 3, lesdites jambes verticales étant pourvues de soupapes d'urgence tout ou rien pour vider le réacteur à boucle.

6. Appareil selon les revendications 2 ou 3, lesdits coudes dans le bas étant pourvus de soupapes d'urgence tout ou rien pour vider le réacteur à boucle.

7. Appareil selon la revendication 1, ledit premier réacteur à boucle étant agencé, le long de la direction verticale, entre les coudes du haut et du fond dudit réacteur à boucle en aval.

8. Appareil selon la revendication 1, ledit premier réacteur à boucle étant agencé, le long de la direction horizontale, entre deux jambes verticales successives dudit réacteur à boucle en aval.

9. Procédé pour la polymérisation en phase liquide d'une ou de plusieurs $\alpha$-oléfines en présence d'un catalyseur de polymérisation, le procédé comprenant :

   a) la prépolymérisation dudit catalyseur dans un milieu liquide dans un premier réacteur pour obtenir une suspension de polymère présentant un degré de polymérisation de 60 à 800 g par gramme de constituant catalytique solide ;
   b) la polymérisation de ladite une ou desdites plusieurs $\alpha$-oléfines dans au moins un réacteur à boucle en aval ;

   la suspension de polymère étant transférée dudit premier réacteur dans ledit réacteur à boucle en aval au moyen d'une conduite de liaison comprenant :

   - un ou plusieurs tuyaux adjacents agencés à des hauteurs augmentant progressivement, chaque tuyau formant, avec une direction horizontale, un angle supérieur à l'angle de repos du polymère obtenu ;
   - une vanne tout ou rien positionnée de manière alignée avec la paroi dudit réacteur à boucle en aval.

10. Procédé selon la revendication 9, ledit catalyseur de polymérisation étant choisi parmi les catalyseurs de type Ziegler-Natta, de type métallocène, à base de chrome.

11. Procédé selon la revendication 9, ledit milieu liquide comprenant un/des monomère(s) alpha-oléfinique(s) liquide(s), éventuellement avec addition d'un solvant hydrocarboné inerte.

12. Procédé selon la revendication 9, le temps de séjour moyen dans l'étape a) étant de 2 à 40 minutes.

13. Procédé selon la revendication 9, la température de fonctionnement dans l'étape a) étant comprise entre 10°C et 50°C.

14. Procédé selon la revendication 9, le degré de polymérisation dans l'étape a) étant de 150 à 400 g par gramme de constituant catalytique solide.

15. Procédé selon la revendication 9, la suspension de polymère, dans le cas d'un arrêt de la polymérisation, étant éliminée dudit premier réacteur et dudit réacteur en aval au moyen de soupapes tout ou rien d'urgence situées au niveau des coudes du fond des réacteurs.

16. Procédé selon la revendication 9, ladite soupape tout ou rien située sur ladite conduite de transfert, dans le cas d'un arrêt de polymérisation, étant fermée et la suspension de polymère à l'intérieur du tuyau de transfert s'écoulant en retour vers ledit premier réacteur.

Fig. 1

Fig. 2

Fig. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005077985 A2
- WO 2006040240 A1
- EP 1611948 A1
- US 20040122187 A1
- WO 2005077522 A1
- US 5928612 A